**Europäisches Patentamt**

**European Patent Office**

**Office européen des brevets**

(19)

(11) Veröffentlichungsnummer: **0 015 495**
**A1**

(12) # EUROPÄISCHE PATENTANMELDUNG

(21) Anmeldenummer: **80100970.5**

(22) Anmeldetag: **27.02.80**

(51) Int. Cl.³: **G 01 N 27/62, G 01 N 31/08**

(30) Priorität: **27.02.79 US 15688**

(43) Veröffentlichungstag der Anmeldung: **17.09.80**
**Patentblatt 80/19**

(84) Benannte Vertragsstaaten: **CH DE FR GB IT**

(71) Anmelder: **Hewlett-Packard Company, 1501 Page Mill Road, Palo Alto California 94304 (US)**

(72) Erfinder: **Sullivan, James J., 1115 Maplefield Road, Neward, Delaware 19713 (US)**
Erfinder: **Kruger, William P., 26705 St. Francis Drive, Los Altos Hills, California 94022 (US)**
Erfinder: **McManigill, Douglas, 250 Wilton Avenue, Palo Alto, California 94303 (US)**
Erfinder: **Neukermans, Armand P., 3510 Arbutus Avenue, Palo Alto, California 94303 (US)**

(74) Vertreter: **Schulte, Knud, Dipl.-Ing., Lindenstrasse 16, D-7261 Gechingen/Bergwald (DE)**

(54) **Elektroneneinfangdetektor.**

(57) Ein Elektroneneinfangdetektor mit einer thermionischen Quelle, beispielsweise einem Heizfaden (12) gibt Elektronen für die Reaktion in einer Quellenkammer (6) ab. Diese enthält eine Öffnung zu einer Detektionskammer (8) mit einem Kollektor (22). In die Quellenkammer wird Schutzgas und in die Detektionskammer wird Probengas eingeführt, und in der Detektionskammer ist eine Entlüftungsöffnung vorgesehen.

EP 0 015 495 A1

ELEKTRONENEINFANGDETEKTOR

Die Erfindung betrifft einen Elektroneneinfangdetektor gemäß dem Oberbegriff von Patentanspruch 1 zum Ermitteln der Gasbestandteile einer von einem Gaschromatographen eluierten Probe.

Ionisationsdetektoren für die Gaschromatographie sind beispielsweise beschrieben in dem Aufsatz "Ionisation Methods for the Analysis of Gases and Vapours" von J.E. Lovelock in Analytical Chemistry, Band 33, Nr. 2, Februar 1961, Seiten 162 bis 178. Am häufigsten wird als Ionisationsdetektor in der Gaschromatographie ein Elektroneneinfangdetektor mit einer Quelle für radioaktive Strahlung verwendet. Diese Art von Detektoren hat allgemein eine hohe Empfindlichkeit und eine hohe Selektivität bezüglich elektrophiler Verbindungen und wird häufig verwendet zum Nachweis von Spuren von Pestiziden in tierischen und pflanzlichen Organismen sowie in Nahrungsmitteln. Derartige Verbindungen, die typischerweise Halogene enthalten, lagern freie Elektronen im Detektor an. Die sich daher ergebende Abnahme der freien Elektronen wird überwacht und als Anzeige für die Konzentration der Untersuchungssubstanz in einer Probe verwendet.

Herkömmlicherweise werden die freien Elektronen in einem Elektroneneinfangdetektor erzeugt durch radioaktive Beta-Strahler in der Form von Folien oder Plattierungen auf der Innenseite des Detektors. Beispiele für derartige Beta-Strahler sind Tritium ($H^3$) und Nickel-63 ($Ni^{63}$).

Die Verwendung von radioaktiven Detektoren bringt mehrere Probleme mit sich. Abgesehen davon, daß derartige Detektoren nur mit speziellen Lizenzen von Regierungsstellen betrieben werden dürfen, dürfen Tritium-Detektoren nicht bei Temperaturen über 325°C verwendet werden, so daß keine Radioaktivität in die Atmosphäre freigesetzt wird. Bei Detektoren mit Nickel-63 muß die Plombierung periodisch überprüft werden, um den Austritt von Radioaktivität zu vermeiden.

Ein weiterer Nachteil radioaktiver Beta-Strahler besteht darin, daß diese Teilchen mit ausreichender Energie erzeugen, um verschiedene Verbindungen, die in dem Detektor enthalten sein können, in unerwünschter Weise zu polymerisieren, so daß der Detektor häufig gesäubert werden muß. Auch können energiereiche Radikale, die durch die Bombardierung mit Beta-Strahlen entstehen, eine Wirtssubstanz für Nebenreaktionen erzeugen. Weiterhin muß der Betrieb häufig sorgfältig überwacht werden, damit der Detektor in der Betriebsart Elektroneneinfang verbleibt und nicht auf die Beweglichkeit oder den Querschnitt der Elektronen reagiert. Im Fall eines Detektors mit Nickel-63 haben die emittierten Beta-Teilchen einen relativ großen Ausbreitungsbereich, so daß es erforderlich ist, das Detektorvolumen relativ groß, nämlich in der Größenordnung 1 $mm^3$ zu halten, um Abweichungen von der gewünschten Betriebsart zu vermeiden. Ein derart großes Volumen ist dann von erheblichem Nachteil, wenn der Detektor wirksam bei Kapillarsäulen verwendet werden soll, die kleine Gasströme eluieren und daher einen Detektor mit einem kleinen Volumen erfordern.

Ein weiterer Nachteil von radioaktiven Detektoren besteht darin, daß die freien Elektronen aus relativ wenigen Primärteilchen erzeugt werden. Demgemäß erzeugt der Detektor ein erhebliches Schrotrauschen, welches den Nachweis von kleinen Mengen von Testsubstanzen stört.

0015495

Es wurden verschiedene Versuche unternommen, um die Nachteile von Elektroneneinfangdetektoren mit radioaktiven Strahlungsquellen zu vermeiden. Beispielsweise wurde eine radioaktive Quelle beschrieben, die gegenüber Verunreinigung durch die Verwendung eines Entionisierungsgases geschützt wird, vergleiche N.L. Gregory, Journal of Chromatography, Band 13, 1964, Seiten 26 bis 32. Auch wurde versucht, freie Elektronen in einem Detektor zu erzeugen durch Verwendung einer gasförmigen Corona-Entladung, einer Hochfrequenz-Entladung oder einer Photoionisationstechnik. Derartige Einrichtungen konnten sich jedoch für Elektroneneinfangdetektoren nicht durchsetzen wegen des hohen Rauschfaktors, der Instabilität der Quelle, der mangelnden Detektorempfindlichkeit und des niedrigen Signal/Rausch-Verhältnisses.

Aus einem Aufsatz von A.K. Braude und V.A. Rotin in Chemical Abstracts, Band 80, 3363K, 1974 und SU-PS 375 548, ausgegeben am 23. März 1973, ist die Verwendung einer nicht radioaktiven thermionischen Strahlungsquelle als Quelle für freie Elektronen bekannt. Dabei sind die Strahlungsquelle und die anderen Detektorbauteile in einer gemeinsamen Kammer angeordnet, und ein Schutzgasstrom wird vorgesehen, um die Verunreinigung der Strahlungsquelle durch eine Testsubstanz zu vermeiden.

Aus US-PS 33 61 907 ist im Elektroneneinfangdetektor gemäß dem Oberbegriff von Anspruch 1 bekannt. Bei diesem ist elektrisch leitend mit der Ionenanordnung der Quellenkammer eine radioaktive Quelle verbunden, welche gegenüber einer Gitterelektrode auf einem Differenzpotential gehalten wird. Die durch Bombardierung mit Betastrahlen erzeugten Elektronen werden in Richtung auf die Kollektorelektrode beschleunigt. Dieses ist erforderlich, um eine unerwünschte Rekombination der Elektronen in der Quellenkammer zu vermeiden.

Ausgehend von einem Elektroneneinfangdetektor der eingans genannten Gattung wird gemäß dem Kennzeichen von Anspruch 1

- 4 -

0015495

erfindungsgemäß die Aufgabe gelöst, daß ein Detektor mit einer thermischen Elektronenquelle geschaffen wird, welche thermisch und mechanisch stabil, gegen Verunreinigung geschützt und im wesentlichen rauschfrei ist. Bezüglich Empfindlichkeit, Signal/ Rausch-Verhältnis und dem Betriebsverhalten bei hohen Temperaturen ist der Detektor gemäß der Erfindung besser bzw. wenigstens vergleichbar mit den derzeit auf dem Markt befindlichen Detektoren mit radioaktiver Strahlungsquelle. Aufgrund des schwachen elektrischen Feldes in der Detektionskammer hat die Raumladung der Elektronen nahe der Verbindung zur Quellenkammer eine größere Wirkung auf die Fähigkeit eines Elektrons, in die Detektionskammer einzutreten, als das elektrische Feld. Je schwächer das Feld ist, umso länger befinden sich die Elektronen in der Detektionskammer und umso wahrscheinlicher ist es, daß in sich einem elektrophilen Molekül des untersuchten Gases anlagern. Da diese Moleküle schwerer und somit weniger beweglich als Elektronen sind, wird der Kollektorstrom verringert. Falls die Kollektorspannung konstant ist, besteht das Ausgangssignal des Detektors in der Reduktion des Kollektorstromes. Falls dagegen der Kollektorstrom konstant gehalten wird, indem die Kollektorspannung nachgestellt wird, bildet diese Spannungsänderung das Ausgangssignal.

Für jedes Elektron, welches aus der Raumladungswolke entfernt wird, diffundiert ein Elektron von der Quellenkammer zur Detektionskammer. Falls die negativen Ionen nicht vorhanden wären, würde eine gegebene Anzahl von Elektronen den Kollektor in einer gegebenen Zeit erreichen. Wenn dagegen negative Ionen vorhanden sind, verbleiben die daran angelagerten Elektronen in der Raumladung während einer längeren Zeit wegen der verringerten Beweglichkeit der Ionen. In dieser Zeit können Elektronen nicht zur Detektorkammer diffundieren und schließlich den Kollektor erreichen. Somit kann ein an einem Molekül angelagertes Elektron verhindern, daß eine große Anzahl von Elektronen den Kollektor erreicht. Diese Anzahl von Elektronen erhöht sich mit der Verweilzeit des negativen Ions in der Detektionskammer, die Verweilzeit nimmt mit abnehmendem Feld zu, und die Empfindlichkeit, d.h. der Abfall des Kollektorstroms bei einer bestimmten Menge von elektrophilem Gas, nimmt zu.

0015495

Bevorzugte Ausführungsformen der Erfindung sind in den Unteransprüchen gekennzeichnet.

Gemäß der Erfindung sind eine Kammer für die Elektronenquelle und eine angrenzende Kammer für die Detektion bzw. den Elektroneneinfang vorgesehen. Die Kammer für die Elektronenquelle enthält eine thermionische Elektronenstrahlungsquelle, eine Einlaßöffnung und eine oder mehrere Auslaßöffnungen, um inertes Schutzgas an der Strahlungsquelle vorbeiströmen zu lassen. Im Betrieb wird in der Kammer für die Strahlungsquelle eine dichte Wolke von Elektronen erzeugt, indem eine ausgewählte Heizspannung an die thermionische Strahlungsquelle angelegt und diese bezüglich der Innenwände der Kammer der Strahlungsquelle auf ein negatives Potential gebracht wird. Die Detektionskammer ist zur Aufnahme freier Elektronen angeordnet und kann auch einen Strom von Schutzgas aus den Auslaßöffnungen der Kammer für die Elektronenquelle aufnehmen. Die Detektionskammer hat eine Einlaßöffnung zur Aufnahme eines Probengases sowie eine Auslaßöffnung zum Ablassen des Probengases und des Schutzgases. Eine Kollektorelektrode in der Detektionskammer wird auf einem solchen Potential gehalten, daß die freien Elektronen eingefangen werden, wenn keine elektrophile Substanz vorhanden ist. Die Gegenwart von elektrophilen Substanzen in der Detektionskammer reduziert den Strom von Elektronen zum Kollektor. Die sich daraus ergebende Änderung des Stromes zur Kollektorelektrode ist ein Maß für die Menge des elektronenbindenden Bestandteils in dem Probengas.

Die Funktionsweise des Detektors kann folgendermaßen zusammengefaßt werden: Wegen des schwachen elektrischen Feldes zwischen der Ausgangsöffnung der Kammer für die Strahlungsquelle und dem Kollektor gelangen Elektronen weitgehend durch Diffusion von der Wolke innerhalb der Quellenkammer durch deren Ausgangsöffnung in die Detektionskammer. Diese Elektronen können als thermische oder freie Elektronen angesehen werden. Die Elektronen bleiben thermisch in der Detektionskammer wegen des geringen Feldes, welches im allgemeinen in dieser herrscht. Dieses ist wichtig, weil dadurch die Wahrscheinlichkeit erhöht wird, daß diese Elektronen an ein elektrophiles Molekül angegliedert werden. Noch bedeutsamer ist, daß bei einer derartigen Angliederung die Zeitspanne viel größer ist, welche erforderlich ist, bis ein eingefangenes Elektron den Kollektor erreicht im Verhältnis zu der entsprechenden Zeitspanne für freie Elektronen. Dieses beruht auf der Tatsache, daß die auf das eingefangene Elektron einwirkende Kraft das relativ schwere Molekül beschleunigen muß, an welchem das Elektron angegliedert ist. Dieses sich langsam bewegende, negativ geladene Molekül innerhalb der Detektionskammer ist in der Funktion ähnlich einem negativ geladenen Gitter und vermindert die Anzahl derjenigen Elektronen wesentlich, welche den Kollektor erreicht. Unter der vorstehenden Bedingung, bei der die Diffusion eine wichtige Rolle spielt, ist die Empfindlichkeit eines derartigen Detektors proportional dem Verhältnis der durchschnittlichen Verweilzeit der Moleküle, welche Elektronen eingefangen haben, zu der durchschnittlichen Durchgangszeit der freien Elektronen durch die Detektionskammer.

Wenn die Quelle für Primärelektronen wie bisher in der Detektionskammer angeordnet wäre, so wäre es erforderlich, ein relativ starkes elektrisches Feld für eine merkliche Emission zu verwenden. Bei einem derartigen Feld nimmt die Wahrscheinlichkeit für den Einfang von Elektronen und damit die Gitterwirkung des Ions ab. Indem die Elektronenquelle in einer getrennten Quellenkammer untergebracht wird, kann der Potentialunterschied zwischen der Quelle und den Enden der Quellenkammer so groß gemacht werden, wie es für eine wirksame Elektronenproduktion erforderlich ist, ohne elektrische Felder in der Detektionskammer zu erzeugen. Die Anordnung von zwei Kammern, von denen die eine als Einrichtung zur Abgabe freier Elektronen, und die andere zur Detektion der Menge der vorhandenen elektrophilen Verbindung dient, macht es möglich, die Anordnung von jeder dieser Kammern zu optimieren.

Während die Verwendung von Schutzgas die Beanspruchung des Heizfadens durch Gase aus der Detektionskammer reduziert, schützt sie nicht übliche Strahlungsquellen, wie sie beispielsweise in Vakuumröhren oder Ionisationsmanometern verwendet werden. Versuche haben ergeben, daß Bariumzirkanat, welches McNair in 'Review of Scientific Instruments', 38,124 (1967) beschreibt, gut in oxidierenden Atmosphären im Detektor verwendbar ist. Auch die folgenden Materialien sind verwendbar: Bariumaluminat ($BaO-Al_2O_3$), Bariumsilikat ($Bao-2SiO_2$), Bariumtantalat ($BaO-Ta_2O_5$), Bariumtitanat ($BaO-TiO_2$), Bariumwolframat ($BaO-WO_3$), und Bariumvanadat ($2BaO-V_2O_5$). Diese Verbindungen sind nicht-stöchiometrisch. Beispielsweise hieße die Verbindung für Bariumwolframat $(BaO)_n \cdot (WO_3)_{1-n}$, wobei der Index n sich entsprechend der speziellen Herstellungsform ändert.

Ein anderer Vorteil des Detektors mit zwei Kammern besteht darin, daß zwei Ströme überwacht werden können, und zwar einer in der Quellenkammer und einer in der Detektionskammer. Irgendeine Änderung der thermionischen Emission kann daher unterschieden werden von Signalen aufgrund einer Elektronenanlagerung, was nicht möglich wäre, wenn nur ein Strom in einer Diode gemessen würde.

Ein weiterer Vorteil dieses Detektors besteht darin, daß er aus Quarz oder einem anderen inerten Material hergestellt werden kann, wogegen bisher Detektoren aus Metall hergestellt wurden, um Lecks zu vermeiden, welche radioaktives Material freisetzen würden. Es ist auch möglich, den Detektor bei viel höheren Temperaturen zu betreiben.

Im folgenden werden bevorzugte Ausführungsbeispiele der Erfindung anhand der Zeichnungen erläutert. Es zeigt:
Figur 1 schematisch eine Querschnittsansicht einer Ausführungsform der Erfindung,

Figur 2 eine Querschnittsansicht einer anderen Ausführungsform der Erfindung,

Figur 3 ein Chromatogramm, welches durch den neuen Detektor ermittelt wurde und die Pestizide Cyclohexan,1,2,3,4,5,6-Hexachlor und Octalen (Aldrin) in einer Probe bestimmt,

Figur 4 eine Querschnittsansicht einer Ausführungsform der Erfindung bei welcher ein koaxialer Strom des Probengases und des Schutzgases verwendet wird, und

Figur 5 ein Chromatogramm, welches durch den Detektor gemäß Figur 4 erhalten wurde und die vorgenannten beiden Pestizide in einer Probe nachweist.

Der Detektor

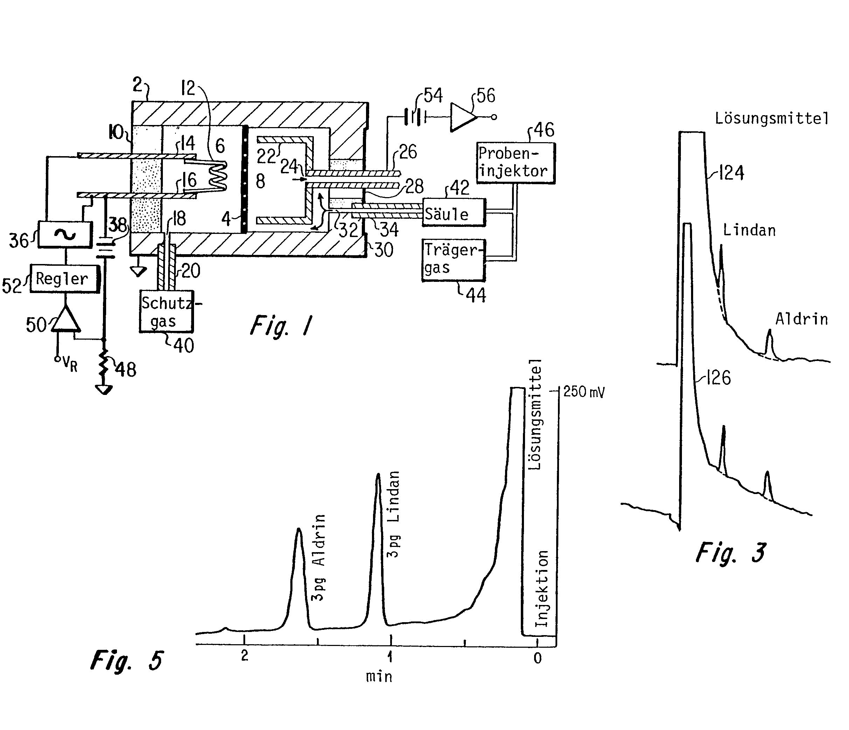

Gemäß Figur 1 enthält der Detektor gemäß der Erfindung einen Zylinderkörper 2, welcher vollständig aus Metall oder aus Isolationsmaterial bestehen kann, welches auf der Innenseite mit einer leitfähigen Beschichtung ausgekleidet ist. Eine perforierte Platte 4 aus leitfähigem Material unterteilt den Raum in dem Zylinderkörper 2 in Raum für eine Quellenkammer 6 und Raum für eine Detektionskammer 8. Die der Platte 4 gegenüberliegende Seite der Kammer 6 ist durch eine zylindrische Scheibe 10 aus Isolationsmaterial abgeschlossen, und ein Heizfaden 12 ist zwischen den Enden leitfähiger Stäbe 14 und 16 befestigt, welche sich durch die Scheibe 10 hindurch erstrecken. Eine Öffnung 18 erstreckt sich durch den Zylinderkörper 2 an einem Punkt nahe dem Heizfaden 12 und kommuniziert mit einem Rohr 20.

Eine napfförmige Elektrode 22 bildet eine Detektionskammer 8, deren offenes Ende sich bis nahe zur perforierten Platte 4 erstreckt. Eine Öffnung 24 im Boden der Napfelektrode 22 kommuniziert mit einem Rohr 26 aus elektrisch leitfähigem Material, welches sich durch einen elektrisch isolierenden Einsatz 28 hindurch erstreckt, der in der Stirnwand 30 des Zylinderkörpers 2 angeordnet ist. Eine Öffnung 32 in der Stirnwand 30, kommuniziert mit einem Rohr 34, das aus leitfähigem oder nicht-

0015495

leitfähigem Material bestehen kann.

Detektorbauteile

Der Heizfaden 12 wird durch Strom aus einer potentialfreien Heizstromquelle 36 erhitzt, die mit den Heizdrahtstäben 14 und 16 verbunden ist. Zwischen dem Heizdrahtstab 16 und dem Zylinderkörper 2 ist eine Quelle 38 für eine Gleichspannung verbunden, wodurch der Zylinderkörper bezüglich dem Heizfaden auf einem positiveren Potential gehalten wird. Die Vorspannung hat einen solchen Wert, daß ein Elektronenstrom erzeugt wird in dem Raum zwischen dem Heizfaden 12 und der perforierten Platte 4 als auch in dem Raum zu den Wänden hin. Eine Quelle 40 für Schutzgas, welches nicht-elektrophil und chemisch inert in der Umgebung der Quellenkammer 6 und der Detektionskammer 8 ist, ist mit dem Rohr 20 verbunden.

Das zu untersuchende Gas, beispielsweise Eluate aus einer gaschromatographischen Säule 42, wird zum Rohr 34 geleitet und tritt in die Detektionskammer 8 über die Öffnung 32 ein. Dem Eingang der Säule 42 wird Trägergas von einer Quelle 44 und die zu analysierende Probe von einem Probeninjektor 46 zugeführt. Das in die Öffnung 18 eintretende Schutzgas und das in die Öffnung 32 eintretende kombinierte Träger- und Schutzgas werden durch das leitfähige Rohr 26 abgezogen.

Eine gleichmäßige Emission ist zwar wünschenswert, aber nicht unbedingt erforderlich und kann erreicht werden, indem die dem Heizfaden zugeführte Leistung oder die Vorspannung für den Heizfaden geregelt wird. Der Zylinderkörper ist mit Masse verbunden, und ein Widerstand 48 ist in Reihe mit der Vorspannungsquelle 38 und Masse verbunden. Ein Eingang eines Komparators 50 ist mit einem Anschluß für Referenzpotential $V_R$ verbunden, und der andere Eingang des Komparators ist mit der Verbindungsstelle der Vorspannungsquelle 38 und des Widerstands 48 verbunden.

Das Ausgangssignal des Komparators 50 wird einem Regler 52 zugeführt, der die der Quelle 36 zugeführte Wechselspannung regelt. Wenn die Emission des Heizfadens 12 abnimmt, nimmt auch die Spannung am Widerstand 48 ab, und der Komparator 50 erhöht die durch die Quelle 36 über den Regler 52 zugeführte Wechselspannung. Das Ausgangssignal kann in wenigstens zwei Betriebsarten ermittelt werden, nämlich bei konstanter Spannung oder bei konstantem Strom.

Wenn das Ausgangssignal erhalten werden soll bei konstanter Spannung an der Detektionskammer 8, d.h. zwischen dem Kollektor 22 und dem geerdeten Zylinderkörper 2, wird das Rohr 26 mit dem positiven Anschluß der Batterie 54 verbunden, und der negative Anschluß der Batterie wird mit einem Elektrometer 56 verbunden. Der beobachtete Stromausschlag am Ausgang des Elektrometers ist ein Maß für die Konzentration der elektrophilen Substanz in der Detektionskammer 8. Wenn sich in der Detektionskammer 8 eine große Menge an elektrophiler Substanz befindet, zeigt der (in der Regel abnehmende) Stromwert eine Sättigung an.

Um den Bereich der Ausgangssignale zu vergrößern, wenn sich in der Detektionskammer 8 große Mengen einer elektrophilen Verbindung befinden, ist eine Einrichtung vorgesehen, um den zwischen Masse und Kollektor 22 fließenden Strom auf einem konstanten Wert zu halten. Das Ausgangssignal ist dann diejenige Spannung, welche zur Aufrechterhaltung eines konstanten Stromes erforderlich ist. Dem Fachmann ist bekannt, wie dieses schaltungstechnisch auszuführen ist.

Durch hinreichende Einengung der Auslaßöffnung oder -öffnungen der Quellenkammer 6, durch welche das Schutzgas in die Detektionskammer strömt, kann der Schutzgasstrom, der für eine minimale Beschädigung des Heizfadens durch Gase in der Detektionskammer erforderlich ist, wesentlich reduziert werden. Dieses ist wichtig, weil ein zu großer Schutzgasstrom die Konzentration der Probe unzulässig verdünnen würde. Dieses vermindert auch die Anzahl der Elektronen, welche durch die gleiche Öffnung in die Detektionskammer diffundieren kann, wobei diese Nummer ausreichen kann, um eine Sättigung bei der größten Menge elektrophiler Verbindungen zu verhindern, welche in der Praxis angetroffen wird.

Zweite Ausführungsform

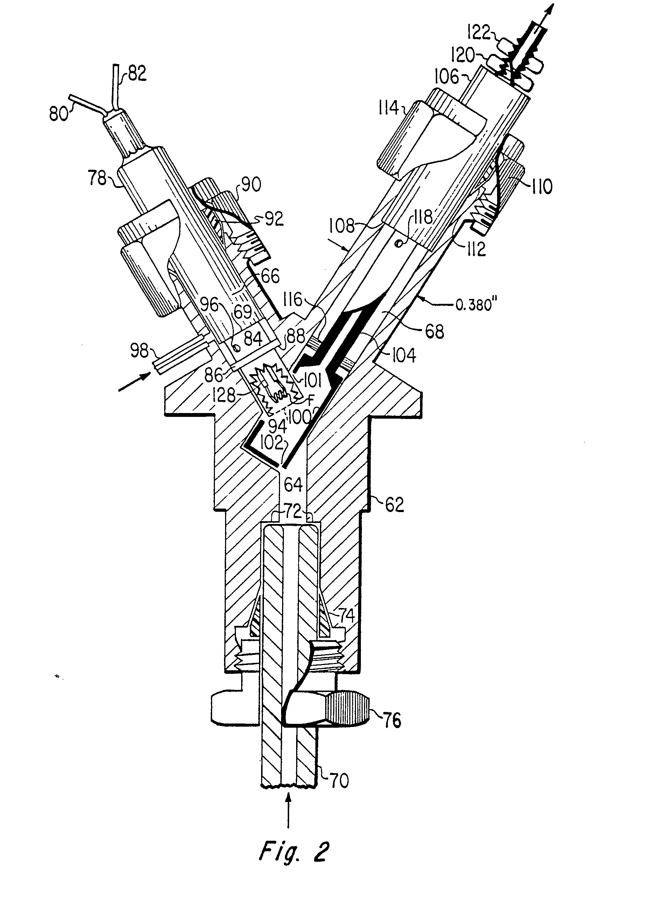

Bei dem Elektroneneinfangdetektor gemäß Figur 2 ist ein entsprechender Metallkörper 62 in der Form eines Y mit längsseitigen Kanälen 64, 66 und 68 vorgesehen, die sich durch einen Schaft, durch linke und durch rechte Zweige erstrecken. Ein Rohr 70, welches Teil einer chromatographischen Säule oder mit dieser verbunden sein kann, erstreckt sich nach oben zum Kanal 64 und liegt an einer Ringschulter 72 an. Es ist eine Flüssigkeitsdichtung vorgesehen, indem ein Ring 74 aus Kunststoffmaterial mit keilförmigen Querschnitt mittels einer Mutter 76 zusammengedrückt wird.

Die Quellenkammer befindet sich am inneren Ende eines hohlen Metallzylinders 78, der mit einer losen Passung in den Längskanal 66 eingesetzt ist. Von einem Punkt 69 bis zu seinem gegenüberliegenden Ende ist der Zylinder 78 mit Kunststoff gefüllt, durch welchen steife elektrische Leiter 80 und 82 verlaufen. Diese Leiter verlaufen auch durch einen Abschnitt 84 mit verengtem Querschnitt eines Zylinders 78, der zwischen dem Punkt 68 und einem Ringwulst 86 liegt. Der Ringwulst 86 wird gegen eine Ringschulter 88 durch eine Mutter 90 gedrückt. Die Mutter presst auch einen Kunststoffring 92 zusammen und bildet dadurch eine hermetische Dichtung. Wie aus dem ausgeblendeten Teil am inneren Ende des Zylinders 78 ersichtlich ist, ist ein Heizfaden F zwischen den Enden der steifen Stäbe 80 und 82 befestigt, und am inneren Ende des Zylinders 78 ist ein Siebgitter 94 angeordnet. Ein Loch 96 erstreckt sich durch die Wand mit dem verengtem Abschnitt 84 des Zylinders 78, und ein Rohr 78 kommuniziert mit dem längsgestreckten Kanal 66.

In das Rohr 98 strömendes Schutzgas gelangt durch den Raum zwischen den Wänden der Öffnung 66 und der Außenfläche des Zylinders 78 in den Ringraum zwischen dem verengten Abschnitt 84 und den Wänden des Kanals 66 und dann in den Zylinder 78 durch das Loch 96. Dann gelangt das Schutzgas an dem Heizfaden F vorbei durch das Siebgitter 94.

Die Detektionskammer liegt innerhalb eines Kollektorzylinders 100, der der Klarheit halber mit ausgezogenen Linien und nicht schraffiert dargestellt ist. Der Kollektorzylinder 100 liegt koaxial zum längsseitigen Kanal 68 im rechten Zweig der Y-förmigen Anordnung und enthält eine Öffnung 101, welche das innere Ende des Zylinders 78 dicht umgibt ohne dieses jedoch zu berühren, so daß das Siebgitter 94 sich vollständig innerhalb der Detektionskammer befindet. Beinahe alle Elektronen, welche durch das Siebgitter 94 diffundieren, gelangen somit zum Kollektorzylinder 100. Der Zylinder 100 hat auch eine Öffnung 102, durch welche Eluate von einer mit dem Rohr 70 verbundenen Säule in die Detektionskammer strömen. Ein Rohr 104 erstreckt sich vom Zylinder 100 durch das äußere Ende des Kanals 68 im rechten Zweig der Y-förmigen Anordnung. Der äußere Abschnitt des Rohres 104 ist in einem mit isolierendem Kunststoffmaterial gefüllten Zylinder 106 enthalten, der ein inneres Ende hat, das an einer Ringschulter 108 anliegt. Gegenüber der Innenseite des Zylinders 106 wird eine hermetische Abdichtung gebildet, indem ein Dichtungsring 110 aus Kunststoff mit einem keilförmigen Querschnitt gegen die nach außen abgeflachte Fläche 112 am äußeren Ende des Kanals 68 mittels einer Mutter 114 gezogen wird. Während der größte Teil des von der Säule durch den Kanal 64 strömenden Gases in die Detektionskammer innerhalb des Zylinders 100 über die Öffnung 102 strömt, gelangt ein Teil dieses Gases außerhalb des Zylinders 100 und der Innenfläche des Kanals 68. Das Gas kann auch durch oder an einem Isolationsring 116 vorbei gelangen, der das Rohr 104 an einem Punkte nahe dem Außenende des Zylinders 100 unterstützt, und in diesem Fall tritt das Gas in das Rohr 104 durch ein Loch 118 ein. Durch Muttern 120 und 122 wird eine Leitung mit einer Einrichtung zur Abgabe eines Ausgangssignals verbunden. Der Y-förmige Körper 62 kann mit Masse oder Referenzpotential verbunden werden, und eine Vorspannungsquelle kann zwischen einem der Stäbe 80 oder 82 und dem Körper 62 gemäß Figur 1 verbunden werden.

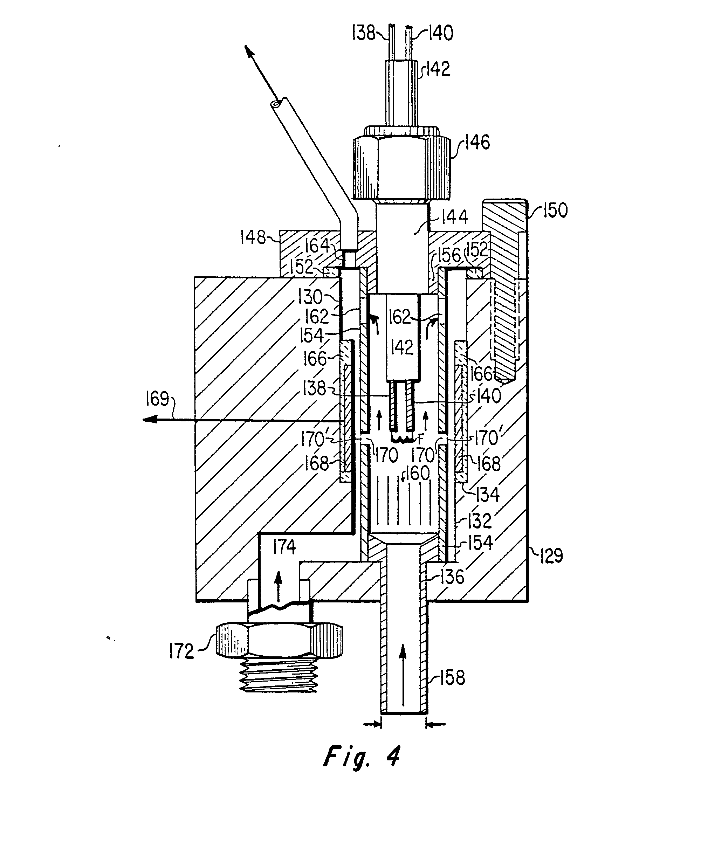

Die Chromatogramme in Figur 3 wurden mittels des Detektors gemäß Figur 2 unter den nachfolgend beschriebenen Bedingungen erhalten. Die obere Kurve 124 zeigt ein Chromatogramm von zwei untersuchten Verbindungen, nämlich Lindan und Aldrin, in einem iso-oktanen Lösungsmittel. Von jeder dieser Verbindungen war eine Menge von $1,3 \cdot 10^{-12}$g vorhanden. Das Signal/Rauschverhältnis für Lindan beträgt 50, so daß die noch bestimmbare Minimalmenge für diese Verbindung $0,052 \cdot 10^{-12}$g beträgt. Die chromatographischen Bedingungen betrugen:

| | |
|---|---|
| Detektortemperatur: | 250 ° |
| Trägergas: | 60 ml/min Stickstoff |
| Schutzgas: | 60 ml/min Stickstoff |
| Ofentemperatur: | 180 °C |
| Säule: | 5% OV-1 stationäre Phase, beschichtet mit einem 80-100 Gitter, 4 mm Innendurchmesser, 1 m Länge |

Betriebsbedingungen:

| | |
|---|---|
| Heizfadenvorspannung: | 38 V |
| Heizfadenstrom: | 2 A Effektivwert |
| Heizfadenwiderstand: | 1,3 Ohm |
| Emissionsstrom: | 3 µA |
| Kollektorspannung: | +0,96 V |
| Volumen der Detektionskammer: | 300 µl |
| Quellenkammer: | 2 mm zwischen Heizfaden F und Siebgitter 94 |

Siebgitter:      25% offen, Lochgrößen: jeweils
0,15 mm, Durchmesser: 4,5 mm

Die untere Spur 126 zeigt ein Chromatogramm, welches mittels eines
herkömmlichen radioaktiven Elektroneneinfangdetektors erhalten
wurde, bei denen die Verbindungen jeweils in Mengen von $1{,}5 \cdot 10^{-12}$g
vorlagen. Das Signal/Rausch-Verhältnis für Lindan beträgt 33,
so daß die kleinste nachweisbare Menge $0{,}079 \cdot 10^{-12}$g beträgt. Die
chromatographischen Bedingungen waren:

Detektor:        15 mCur. Ni-63, konstanter
Strom, Schaltung mit veränderbarer Pulsfrequenz.

Detektortemperatur: 250°C

Trägergas:       60 ml/min Stickstoff Ofentemperatur: 210°C

Säule, 4mm Innendurchmesser, 1m Länge, 10%
OV-1 stationäre Phase, 80-100 Gitter

Somit entspricht der nicht-radioaktive Detektor bezüglich der
nachweisbaren Minimalmenge den derzeit bekannten radioaktiven
Detektoren.

Kollinearer Detektor

Bei dem Detektor gemäß Figur 4 strömen das Schutzgas und das
Säulen- oder Probengas in parallelen Kanälen durch gegenüberliegende Seiten des Siebgitters zwischen der Quellenkammer
und der Detektionskammer mit der gleichen Geschwindigkeit, so
daß am Gitter kein Druckunterschied entsteht. Dadurch wird der
Strom des Säulengrades in die Detektionskammer minimal, so
daß die Probenkonzentration nicht durch die Größe des Schutzgasstroms beeinträchtigt wird.

Der Detektor befindet sich in einem Metallblock 129, der in
nicht dargestellter Weise bezüglich der Temperatur geregelt
werden kann. In dem Block 129 wird ein zylindrischer Hohlraum
130 mit einem Abschnitt 132 mit vermindertem Durchmesser ausgebildet, der eine Ringschulter 134 bildet. Der Abschnitt 132 kommuniziert mit einem zylindrischen Durchgang 136 eines kleineren Durchmessers, der sich durch den Boden des Blocks 129 erstreckt.

Steife Leiter 138 und 140 sind in einem festen keramischen Zylinder 142 eingebettet, der sich durch einen Metallzylinder 144 erstreckt. Die Zylinder 142 und 144 sind koaxial bezüglich des Zylinderhohlraums 130. Die hermetische Abdichtung zwischen dem keramischen Zylinder 142 und dem Metallzylinder 144 wird erhalten, indem ein nicht dargestellter Ringwulst aus Kunststoffmaterial durch eine Mutter 146 zusammengedrückt wird. Der Metallzylinder 144 ist an einer Deckelplatte 148 angelötet, die an dem Block 129 durch Schrauben 150 befestigt ist, von denen nur eine Schraube im Querschnitt dargestellt ist. Eine Ringdichtung 152 ist zwischen der Deckelplatte 148 und dem Block 129 zusammengedrückt. Der Keramikzylinder 142 erstreckt sich durch und unter den Metallzylinder 144, und die Stäbe 138 und 140 erstrecken sich weiter in den Hohlraum 130. Ein Heizfaden F ist zwischen den Enden der Stäbe 138 und 140 verbunden. Ein Ende eines hohlen Metallzylinders 154, der koaxial zu dem zylindrischen Hohlraum 130 angeordnet ist, ist im Preß-Sitz auf einen zylindrischen Vorsprung 156 aufgebracht, der sich von der Unterseite der Deckelplatte 148 aus erstreckt. Der Zylinder 154 erstreckt sich zum Boden des Hohlraumes 130, wo er abgedichtet ist durch eine Lötnaht an dem Block 128.

Das Schutzgas von einer nicht dargestellten Quelle wird in den Detektor über ein Rohr 158 eingeführt, das sich durch den Durchgang 136 in das bodenseitige Ende des Metallzylinders 154 erstreckt. Es wird ein laminarer Strom des Schutzgases erreicht durch dicht benachbarte parallele Rohre 160, die parallel zur Achse des zylindrischen Hohlraums 130 sind. Das Schutzgas gelangt nach oben durch den Hohlraum 130, an dem Heizfaden F vorbei und aus dem Hohlraum 130 heraus durch die Öffnung 162

am oberen Ende des Metallzylinders 154 und in den Ringraum zwischen dem Metallzylinder 154 und der Wand des zylindrischen Hohlraums 130. Es gelangt dann durch einen Kanal 164 durch die Deckelplatte 148.

Ein Ring 166 aus keramischen Isolationsmaterial, der gerade in den zylindrischen Hohlraum 130 paßt, liegt auf der Innenschulter 134 auf. Auf der Innenseite des Keramikrings 166 ist ein Kollektor in der Form eines Rings oder einer Beschichtung 168 aufgebracht, die sich im Abstand von der Außenfläche des Metallzylinders 154 befindet. Vom Kollektor 168 aus erstreckt sich eine isolierte Leitung 169 zu einem Punkt außerhalb des Blocks 129 zur Abgabe des Detektorausgangssignals. Am Umfang des hohlen Metallzylinders 154 in einer Ebene in der Höhe des Heizfadens F sind Öffnungen 170 ausgebildet. Die Öffnungen 170 sind überspannt mit einem leitfähigen Gitter 170', so daß eine elektrische Abschirmung und eine aerodynamisch glatte Form für den Zylinder 154 erhalten wird.

Probengas, beispielsweise das von einer Säule eluierte Gas, wird in den Block 129 des Detektors über einen Schraubanschluß 172 eingeführt, der mit einem Durchgang 174 innerhalb des Blocks 129 kommuniziert. Der Durchgang 174 kommuniziert mit dem Boden des abgesetzten Abschnittes 132 des zylindrischen Hohlraums 130. Das Gas strömt dann nach oben in den Ringraum zwischen dem Zylinder 154 und den Wänden des Hohlraums 130, zwischen dem Kollektor 168 und dem Zylinder 154, an den Öffnungen 170 vorbei und nach außen durch den Kanal 164. Der Ringraum zwischen dem Metallzylinder 154 und der Wand des Hohlraums 130 am abgesetzten bzw. verminderten Abschnitt 132 ist so dünn, daß ein laminarer Strom erzeugt wird.

Idealerweise sollten die Geschwindigkeit und der Druck des Schutzgases, welches an der Innenseite der Öffnung 170 vorbeiströmt, die gleichen Werte wie die Geschwindigkeit und der Druck des Probengases haben, das an der Außenseite der Öffnung 170 vorbeiströmt. In der Praxis, insbesondere wenn

über der Öffnung 170 ein Gitter verwendet wird, ist selbst bei einer Differenz der Gasgeschwindigkeiten keine Vermischung zu beobachten. Der Heizfaden ist vorzugsweise vertikal ausgerichtet, so daß der durch diesen erstreckte Heizstrom mit dem Schutzgasstrom ausgerichtet ist. Das Schutzgas macht die Anlagerung der diffundierenden Probengase auf dem Heizfaden F minimal, indem diese vertikal abgeführt werden. Auch treten etwa entstehende Reaktionsprodukte nicht in die Detektionskammer ein. Da sich das Schutzgas wie bei der anderen Ausführungsform nicht mit dem Säulengas vermischt, verdünnt es das Säulengas nicht und beeinträchtigt auch die Empfindlichkeit der Messung nicht.

Bei dieser Ausführungsform befindet sich die Quellenkammer innerhalb des Zylinders 154, und die Detektionskammer ist ein Ringraum zwischen dem Zylinder 154 und dem Kollektor 168 zwischen einem Punkt, der gerade oberhalb der Öffnung 170 liegt, und einem gerade darunter liegenden Punkt.

Figur 5 zeigt ein Chromatogramm der Substanzen Lindan und Aldrin, das durch den kollinearen Detektor erhalten wurde. Die Injektionstemperatur betrug 250°C, die isotherme Säulentemperatur 220°C, die Detektortemperatur 250°C. Die Strömungsgeschwindigkeit des als Trägergas verwendeten Stickstoffs betrug 1 ml/s, und die Strömungsgeschwindigkeit des als Schutzgas verwendeten Stickstoffs betrug 2 ml/s. Als Proben dienten $3 \cdot 10^{-12}$ g/µl Lindan und Aldrin in Iso-oktan gelöst. Das Volumen betrug 1 µl.

Modifikationen

Obgleich die Ausführungsformen gemäß Figur 2 und 4 auf bestimmte Dimensionierungen und Betriebsbedingungen in Verbindung mit den Chromatogrammen von Figur 3 und Figur 5 ausgerichtet sind, versteht es sich, daß im Rahmen der Erfindung eine Reihe von Abweichungen möglich ist.

Der Zweck der Quellenkammer in den verschiedenen Ausführungsformen besteht darin, einen reichlichen Vorrat an Elektronen
am Siebgitter oder den Öffnungen zwischen der Quellenkammer
und der Detektionskammer bereitzustellen. Um die Verunreinigung des Heizfadens durch die Diffusion von Gasen aus der
Detektionskammer in die Quellenkammer zu vermindern, sollte
der Heizfaden so nahe wie möglich an dem Siebgitter oder den
Öffnungen angeordnet werden. Je größer dieser Abstand ist,
um so kleiner ist die Anzahl der Elektronen, welche die nahe
Seite des Gitters erreicht. Dieser Effekt könnte kompensiert
werden, indem die Temperatur des Heizfadens erhöht wird,
wodurch dessen Lebensdauer vermindert wird. Um eine größere
Anzahl von Elektronen anzuziehen, welche emittiert werden,
wenn die Temperatur des Heizfadens in der Detektionskammer
8 erhöht wird, müßte der Heizfaden ein negativeres Potential
als das Gitter erhalten. Somit gibt ein große Anzahl möglicher
Kombinationen in bezug auf die Heizfadentemperatur, die
Vorspannung und die Positionierung des Heizfadens.

Die Wände der Quellenkammer könnten nicht-leitend sein, so
daß das Siebgitter selbst der einzige Abschnitt der Quellenkammer mit positiven Potential ist. Indessen könnten statische Aufladungen auf der Oberfläche der nicht-leitfähigen
Oberfläche schädliche Auswirkungen haben oder in unerwünschter
Weise die Anzahl der Elektronen verändern, welche in die Nähe
des Gitters gelangen.

Es hat sich herausgestellt, daß der Detektor noch zufriedenstellend arbeitet, wenn die Kollektorspannung bezüglich des
Siebgitters erhöht wird, obgleich dieses im allgemeinen eine
Verminderung der Empfindlichkeit nach sich zieht. Dieses kann
daher rühren, daß die Elektronen sich schneller zum Kollektor
bewegen, so daß es weniger wahrscheinlich ist, daß sie einem
elektrophilen Teilchen angelagert werden. Die Verminderung
der Empfindlichkeit kann auch verursacht werden, durch eine
Verminderung der Verweilzeit der negativen Ionen, weil sich diese ebenfalls zum Kollektor mit einer größeren Geschwindigkeit bewegen. Obgleich es zunächst so aussieht, daß der Kollektor ein positives Potential gegenüber dem Siebgitter haben sollte, hat sich jedoch herausgestellt, daß dieses Potential auch einen geringen negativen Wert haben kann. Dieses beruht darauf, daß die Diffusion die Hauptantriebskraft der Elektronen ist und diese daher ein schwaches, bremsend wirkendes Feld überwinden können. Brauchbare Ergebnisse wurden erhalten mit Spannungen im Bereich von -0,050 V und + 5V.

Es wäre auch möglich, die Detektorkammer mit nicht-leitfähigen Innenwänden aufzubauen, und damit den Kollektor als das einzige Metall in der Kammer zu belassen. Wiederum könnte jedoch die Ladungsträgeransammlung auf den nicht-leitfähigen Oberflächen unerwünschte Nebenwirkungen haben.

Bezüglich der Elektronenquelle ist anzustreben, daß die Heizfadentemperatur so tief wie möglich gehalten wird, um unerwünschte Nebenreaktionen gering zu halten, die stets bei Spurenmengen von Sauerstoff oder Wasser auftreten. Aus diesem Grund wird eine thermionische Strahlungsquelle mit einer sehr niedrigen Arbeitsfunktion angestrebt, wobei natürlich noch ein stabiler Betrieb gewährleistet sein muß. Bezüglich der Position und der Größe der Elektronenquelle für eine maximale Empfindlichkeit ist anzustreben, daß das gesamte Probengas der maximalen Konzentration der verfügbaren Elektronen reagiert. Vorzugsweise sollte kein Teil des Probengases in der Lage sein, zum Auslaßloch zu strömen, ohne dem Strom der Elektronen ausgesetzt zu sein. Auch versteht sich, daß die Bedingungen für eine maximale Empfindlichkeit und einen maximalen Betriebsbereich nicht jeweils miteinander verträglich sind.

Bei dem Elektroneneinfangprozess handelt es sich im wesentlichen um eine Reaktion zwischen Elektronen und diese anlagern-

- 20 -

0015495

den Substanzen. Diese Reaktion sollte so weitgehend und so schnell wie möglich ablaufen, und es ist daher eine hohe Elektronenkonzentration erwünscht. Im Gegensatz zum Stand der Technik ist die Geschwindigkeit der Elektronenerzeugung an der Quelle praktisch nicht begrenzt. Selbst wenn die Verengung zwischen der Quellenkammer und der Detektionskammer verhältnismäßig gering ist, so ist die Elektronenkonzentration in der Detektionskammer verhältnismäßig groß und vergleichbar mit derjenigen, die in dem puls-förmig betriebenen radioaktiven Detektor herrscht, obgleich es sich um einen kontinuierlichen Strom von Elektronen handelt. Falls diese Betriebsart mit einer radioaktiven Strahlungsquelle durchgeführt würde, wäre die Elektronenkonzentration verhältnismäßig gering wegen der begrenzten Geschwindigkeit, mit der Elektronen erzeugt werden können. Der Strom in der Detektionskammer ist nur ein kleiner Teil des Stroms in der Quellenkammer. Wenn daher der Strom in der Detektionskammer durch die Gitterwirkung der negativen Ionen vermindert wird, so hat dieses kaum einen Einfluß auf den Strom in der Quellenkammer.

Es ist anzumerken, daß die beschriebene Wirkung als negatives Gitter nur erreicht wird, wenn eine reine Elektronenquelle erreicht werden kann. Bei radioaktiven Detektoren verhindert die positive Raumladung der positiven Ionen diesen Effekt.

- 21 -                                    0015495

PATENTANSPRÜCHE

1. Elektroneneinfangdetektor mit einer Quellenkammer, einer Detektionskammer und einer Quelle zur Abgabe von Elektronen an die Quellenkammer, bei welchem die Quellenkammer eine Öffnung zum Einlaß von Schutzgas, eine mit der Detektionskammer kommunizierende Auslaßöffnung und eine Elektrodeneinrichtung aufweist, welche Elektronen zu einem Punkt nahe der Auslaßöffnung der Quellenkammer bewegt, wenn zwischen der Elektrodeneinrichtung und der Elektronenquelle eine entsprechende Potentialdifferenz angelegt ist, und die Detektionskammer Öffnungen zum Einlaß und zum Auslaß des zu untersuchenden Gases sowie eine Kollektorelektrode aufweist, welche negativ geladene Teilchen anzieht, wenn sie auf einem geeigneten Potential gehalten wird, dadurch gekennzeichnet, daß die Elektronenquelle eine zur Elektronenemission beheizbare Wendel (12) aufweist, welche elektrisch isoliert bezüglich der Elektrodeneinrichtung (2; 4) angeordnet ist und zwischen der Kollektorelektrode (22) und der Auslaßöffnung (4) der Quellenkammer (16) im Betrieb ein derart schwaches elektrisches Feld angelegt ist, daß die Elektronen von der thermischen Elektronenquelle im wesentlichen während einer solch hohen Verweilzeit durch die Detektionskammer (8) diffundieren, daß diese zu einer ausreichenden Verminderung des Kollektorstroms führt infolge der Anlagerung von thermischen Elektronen an Ionen des untersuchten Gases.

2. Elektroneneinfangdetektor nach Anspruch 1, dadurch gekennzeichnet, daß eine Einrichtung (36) die thermische Elektronenquelle mit Heizenergie speist, eine Einrichtung (38) zwischen der thermischen Elektronenquelle (12) und der Elektrodeneinrichtung (2; 4) in der Quellenkammer (6) eine Gleichspannung aufrechterhält, eine Einrichtung (54) eine Gleichspannung zwischen der Kollektorelektrode (22) in der Detektionskammer (8) und der Elektrodeneinrichtung der Quellenkammer aufrechterhält und eine Einrichtung (56) Meßsignale abgibt, welche dem durch die Kollektorelektrode fließenden Strom entsprechen.

3. Elektroneneinfangdetektor nach Anspruch 2, dadurch g e - k e n n z e i c h n e t ,  daß eine Einrichtung (38, 54) die Gleichspannungen auf solche Werte einstellt, daß die durch den Elektronenstrom geführte Raumladung von der thermischen Elektronenquelle zur Elektrodeneinrichtung in der Quellenkammer (6) die Raumladung übersteigt, die zur Kollektorelektrode (22) in der Detektionskammer (8) geführt ist.

4. Elektroneneinfangdetektor nach einem der vorhergehenden Ansprüche, dadurch g e k e n n z e i c h n e t ,  daß eine Einrichtung (50, 52) die Wiederholungsgeschwindigkeit einstellt, mit welcher Energieimpulse der thermischen Ionenquelle (12) zugeführt werden.

5. Elektroneneinfangdetektor nach einem der vorhergehenden Ansprüche, dadurch g e k e n n z e i c h n e t ,  daß die Auslaßöffnung (4) der Quellenkammer (6) aus einem Gitter aus elektrisch leitfähigem Material besteht und mit der Elektrodeneinrichtung elektrisch leitend verbunden ist.

6. Elektroneneinfangdetektor nach einem der vorhergehenden Ansprüche, dadurch g e k e n n z e i c h n e t ,  daß die Heizwendel aus Metall besteht und mit einem Metalloxyd aus einem Alkalimetall beschichtet ist.

7. Elektroneneinfangdetektor nach einem der Ansprüche 1 bis 5, dadurch g e k e n n z e i c h n e t ,  daß die thermische Elektronenquelle aus Metall besteht und mit einer Mischung aus Metalloxyden beschichtet ist, die das Oxyd wenigstens eines Alkalimetalles enthält.

8. Elektroneneinfangdetektor nach einem der vorhergehenden Ansprüche, dadurch  g e k e n n z e i c h n e t ,  daß eine Einrichtung (78) vorgesehen ist zur lösbaren Anordnung der Quellenkammer.

9. Elektroneneinfangdetektor nach Anspruch 7, dadurch  g e k e n n - z e i c h n e t ,  daß eine die Quellenkammer ausbildende Einrichtung einen ersten Hohlkörper (78) aufweist, der längs einer ersten Achse ausgerichtet ist, die Einlaßöffnung der Quellenkammer eine Öffnung (98) in einer Seite des ersten Hohlkörpers (66) ausbildet, die Auslaßöffnung der Quellenkammer an einem Ende des ersten Hohlkörpers angeordnet ist und quer zur ersten Achse verläuft, ein die Detektionskammer ausbildender zweiter Hohlkörper (68) längs einer zweiten Achse in einem von Null verschiedenen Winkel bezüglich der ersten Achse verläuft, eine Einlaßöffnung (102) in der Seite des zweiten Hohlkörpers ausgebildet ist, der erste Hohlkörper derart ausgebildet ist und daß das die Auslaßöffnung enthaltende Ende neben der Öffnung in der Seite des zweiten Hohlkörpers liegt (Fig. 2).

10. Elektroneneinfangdetektor, dadurch  g e k e n n z e i c h n e t ,  daß ein Metallkörper (62) mit ersten, zweiten und dritten sich schneidenden Kanälen (64, 66, 68) vorgesehen ist, eine Anordnung lösbar in dem ersten Kanal befestigt ist, eine Einrichtung eine Quellenkammer am inneren Ende der Anordnung ausbildet, eine Heizwendel (F) in der Quellenkammer angeordnet ist, Leitungen mit der Heizwendel verbunden sind und isoliert von der ersten Anordnung durch diese hindurch verlaufen, eine Einrichtung eine Eingangsöffnung (98) in der Quellenkammer ausbildet, eine Einrichtung einen Durchgang in dem Körper ausbildet, der von der Außenseite des Körpers mit der Eingangsöffnung kommuniziert, eine Auslaßöffnung für die Quellenkammer ein Gitter (100) aus elektrisch leitfähigem Material aufweist, das am inneren Ende der Quellenkammer angeordnet ist, eine zweite Anordnung lösbar in dem zweiten Kanal (68) angeordnet ist und die folgenden Bestandteile aufweist:
eine Einrichtung, welche eine Detektionskammer am inneren Ende der zweiten Anordnung ausbildet,
eine durch wenigstens einen leitfähigen Abschnitt der Innenflächen der Detektionskammer ausgebildete Kollektorelektrode, ein mit der Detektionskammer derart kommunizierendes Rohr (76), daß von diesem eine Auslaßöffnung gebildet wird und das Rohr eine elektrische Verbindung zur leitfähigen Oberfläche ausbildet, eine Einrichtung das Rohr und den Kollektor von dem Metallkörper elektrisch isoliert und eine Einrichtung eine Öffnung (64) in der Detektionskammer ausbildet, welche mit der Auslaßöffnung der Quellenkammer derart kommuniziert, daß die Kollektorelektrode elektrisch isoliert von dem leitfähigen Gitter und von der Quellenkammer ist und eine Einrichtung eine Einlaßöffnung in der Detektionskammer definiert, welche mit dem dritten Kanal in dem Körper kommuniziert.

Fig. 1

Fig. 3

Fig. 5

1/3

0015495

*Fig. 2*

*Fig. 4*

**Europäisches Patentamt**

**EUROPÄISCHER RECHERCHENBERICHT**

00 15 495

EP 80 10 0970

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 318 149 (P.F. VARADI) <br> * Spalte 5, Zeilen 24-70 * <br><br> -- | 1 |
| A | US - A - 3 378 725 (J.H. BOCHINSKI) <br> * Spalte 1; Spalte 2, Zeilen 1-65 * <br><br> -- | 1 |
| A | DE - A - 1 948 185 (FARBWERKE HOECHST) <br> * Insgesamt * <br><br> -- | 1 |
| A | US - A - 4 129 418 (W.D. DAVIS) <br> * Spalte 2, Zeilen 35-68 * <br><br> -- | 1 |
| A | US - A - 4 095 171 (J.E. BAUERLE) <br> * Spalte 1; Spalte 2, Zeilen 1-60 * <br><br> -- | 1 |
| A | GB - A - 974 924 (R. LOTTENBACH) <br> * Insgesamt * <br><br> -- | 1 |
| A | DE - A - 2 739 932 (EMERSON ELEC-TRIC) <br> * Seite 27, Zeilen 23-34; Seite 28, Zeilen 1-14 * <br><br> ---- | 1 |

**KLASSIFIKATION DER ANMELDUNG (Int. Cl.)**

G 01 N 27/62
31/08

**RECHERCHIERTE SACHGEBIETE (Int. Cl.)**

G 01 N 27/62
31/08
27/68
27/70

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30-05-1980 | CALLEWAERT |

EPA form 1503.1 06.78